# EUROPEAN PATENT APPLICATION

(11) **EP 4 611 235 A1**
(43) Date of publication of application: **03.09.2025**
(21) Application number: 25155208.9
(22) Date of filing: 31.01.2025
(51) Int. Cl.: H02K 11/225, H02K 11/01, H02K 5/16, H02K 7/116

(54) **VEHICLE DRIVE SYSTEM**

(30) Priority: 01.03.2024 JP 2024031390
(71) Applicant: MAZDA MOTOR CORPORATION, Hiroshima 730-8670 (JP)
(72) Inventor: Furusho, Kentaro, Aki-gun, Hiroshima, 730-8670 (JP)
(74) Representative: Laufhütte, Dieter

(57) **Abstract**

A vehicle drive system is provided, which includes a shaft, a motor which rotates the shaft, a resolver which detects a rotation state of the motor, a shielding member which suppresses leakage magnetic flux discharging from the motor to the resolver, and a case which accommodates the shaft, the motor, and the resolver. The shielding member is disposed so that the shielding member extends in a radial direction of the shaft in a space between a gap that is formed between a stator coil and a rotor of the motor, and the resolver. A notch is formed radially outward of the shielding member to avoid interference with one of a bearing part and a gear provided inside the case.

## Description

The present disclosure relates to a vehicle drive system mounted on a vehicle.

For example, JP5488127B2 discloses a drive mounted on electric vehicles and hybrid vehicles, which is provided with a driving motor. This driving motor is comprised of a stator fixed to a case, and a rotor disposed rotatable inside the stator. A drive gear fixed to a shaft of the motor, and a resolver for detecting a rotational speed of a rotor shaft which supports the rotor are disposed inside the case. The resolver is located between the rotor of the motor and the drive gear, and includes a resolver stator, a resolver rotor, and a shielding member for suppressing leakage magnetic flux discharged from a coil end of the motor.

Meanwhile, although in the drive system disclosed in JP5488127B2 the rotor of the motor, the resolver, and the drive gear are arranged in this order, this spatial relationship may cause interference of gears and bearings with the shielding member depending on the layout. In particular, the likelihood may increase when shortening the size of the case in an axial direction. As a result, it becomes difficult to secure the space for providing the shielding member, and the measure against the leakage magnetic flux discharged from the motor poses a problem.

The present disclosure is made in view of this regard, and one purpose thereof is to provide a shielding member, which suppresses that leakage magnetic flux discharged from a motor reaches a resolver, inside the case, while avoiding interference with a gear and a bearing.

A vehicle drive system is provided which includes a shaft, a motor which rotates the shaft, a resolver which detects a rotation state of the motor, a shielding member which suppresses leakage magnetic flux discharging from the motor to the resolver, and a case which accommodates the shaft, the motor, and the resolver. The shielding member is disposed so that the shielding member extends in a radial direction of the shaft in a space between a gap that is formed between a stator coil and a rotor of the motor, and the resolver. A notch is formed radially outward of the shielding member to avoid interference with one of a bearing part and a gear provided inside the case.

The bearing part may include a bearing and a bearing fixing part which fixes the bearing to a given position. The bearing fixing part may be formed so that the bearing fixing part approaches the motor in an axial direction. The notch may be formed to avoid interference with the bearing fixing part.

A first gear may be provided to the shaft. A lower shaft having a second gear which meshes with the first gear may be provided below the shaft. The bearing part may support one end part of the lower shaft in the axial direction. The notch may be formed only in a lower part of the shielding member.

The shielding member may include a first shielding plate disposed so that the first shielding plate extends in the radial direction of the shaft in the space, and a second shielding plate extending in a direction approaching the rotor from a radially inner edge part of the first shielding plate with respect to the shaft. The notch may be formed in the first shielding plate.

The second shielding plate may have an annular shape continuous in a circumferential direction of the rotor. The notch may be formed in a part of the shielding member other than the second shielding plate.

The first shielding plate may be fastened by a plurality of fastening members to the case at a plurality of fastening parts separated in a circumferential direction of the shaft. The notch may be formed in a part separated from the fastening parts in the circumferential direction of the shaft.
Fig. 1 is a perspective view of a vehicle drive system, when seen from the front.
Fig. 2 is a front view of the vehicle drive system.
Fig. 3 is a partial cross-sectional view of the vehicle drive system.
Fig. 4 is a view schematically illustrating an internal structure of the vehicle drive system.
Fig. 5 is an enlarged cross-sectional view of a vicinity of an upper part of a stator and a rotor.
Fig. 6 is an enlarged cross-sectional view of a vicinity of a lower part of the stator and the rotor.
Fig. 7 is a right side view of a resolver and a shielding member.
Fig. 8 is a perspective view of the resolver and the shielding member, when seen from the right side.
Fig. 9 is a cross-sectional view of a fastening part between the resolver and the shielding member.

### DETAILED DESCRIPTION OF THE DISCLOSURE

Hereinafter, one embodiment of the present disclosure is described in detail with reference to the accompanying drawings. Note that the following preferable embodiment is essentially only illustration, and it is not intended to limit the present disclosure, its application, or its use.

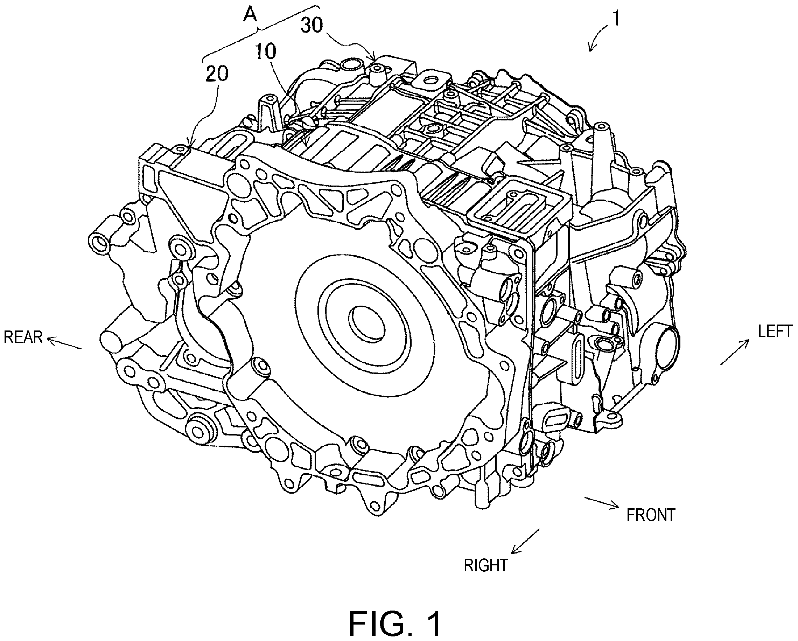

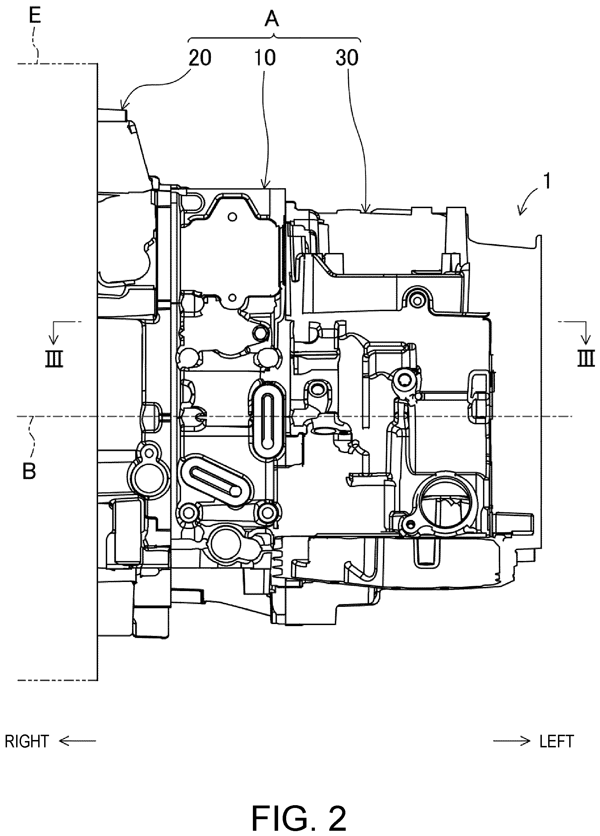

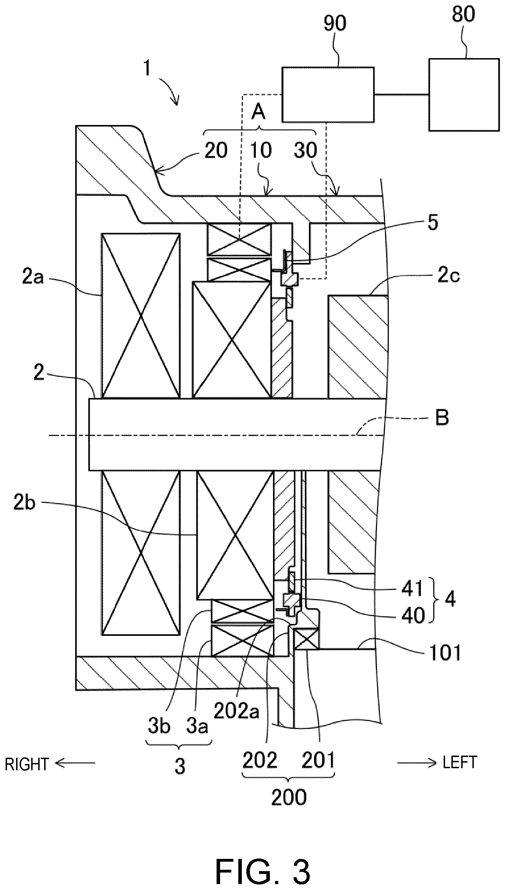

Figs. 1 and 2 illustrate a vehicle drive system 1 according to one embodiment of the present disclosure. The vehicle drive system 1 is mounted on a vehicle (not illustrated) and drives driving wheels of the vehicle. The vehicle may be an electric vehicle which is propelled only by the power of an electric motor, or may be a hybrid vehicle which is propelled by the power of both an internal combustion engine and the motor. The motor which generates the power for driving the driving wheels is a driving motor. The hybrid vehicle may be a plug-in hybrid vehicle which can be charged by an external electric power source. In this embodiment, the hybrid vehicle is described as the vehicle on which the vehicle drive system 1 is mounted. Therefore, although a driving battery 80 for supplying electric power to a motor 3 and a control unit 90 for controlling the motor 3 are also mounted on the vehicle on which the vehicle drive system 1 is mounted as illustrated in Fig. 3, since these components are conventionally common knowledge, detailed description thereof is herein omitted. The control unit 90 has an inverter circuit.

The vehicle drive system 1 is mounted, for example, in an engine room of the vehicle. The engine room may be provided to a front part or a rear part of the vehicle. As illustrated in the drawings, a front-and-rear direction and a left-and-right direction are defined. That is, on the basis of a state where the vehicle drive system 1 is mounted in the engine room of the vehicle, the side which becomes forward of the vehicle is simply referred to as "the front," the side which becomes rearward of the vehicle is simply referred to as "the rear," the side which becomes leftward of the vehicle is simply referred to as "the left," and the side which becomes rightward of the vehicle is simply referred to as "the right." The left-and-right direction is a vehicle width direction. This definition of direction is only for facilitating the description of this embodiment and does not limit the present disclosure.

As partially illustrated in Fig. 2 by an imaginary line (two-dot chain line), an engine E is disposed on the right side of the vehicle drive system 1 in the engine room. A crankshaft (not illustrated) of the engine E extends in the left-and-right direction, and the engine E is a so-called "transversely-mounted engine." The engine E and the vehicle drive system 1 are lined up in the left-and-right direction, the vehicle drive system 1 is disposed on the left side of the engine E, and a left part of the engine E and a right part of the vehicle drive system 1 is coupled by fastening members (not illustrated). The power outputted from the crankshaft of the engine E is inputted into the vehicle drive system 1. Note that the left-and-right spatial relationship may be reversed, and the lined-up direction of the engine E and the vehicle drive system 1 is not limited in particular. Further, in the case of the electric vehicle, since the engine E is not mounted therein, the above-described engine room is referred to as a "motor room" below.

As illustrated in Fig. 3, the vehicle drive system 1 is provided with a shaft 2, the motor 3 which rotates the shaft 2, a resolver 4 which detects a rotation state of the motor 3, a shielding member 5 which suppresses leakage magnetic flux discharging from the motor 3 to the resolver 4, and a case A. The shaft 2, the motor 3, the resolver 4, and the shielding member 5 are disposed inside the case A, and therefore, the case A is a member which accommodates the shaft 2, the motor 3, the resolver 4, and the shielding member 5. The shaft 2 extends in the left-and-right direction inside the case A, and therefore, the axial direction of the crankshaft of the engine E is in agreement with the axial direction of the shaft 2 (illustrated by a reference character "B").

The case A is provided with a motor housing 10, a right cover member 20, and a left cover member 30. The shaft 2 is rotatably supported by the case A. The motor housing 10, the right cover member 20, and the left cover member 30 are made of light alloy, such as aluminum alloy, and are high-rigidity members. In this embodiment, since the right cover member 20 and the left cover member 30 are disposed on the right side and the left side, respectively, they are referred to as such names. However, the right cover member 20 may be referred to as a "front cover member," and the left cover member 30 may be referred to as a "rear cover member." The right cover member 20 is a first cover member, and the left cover member 30 is a second cover member.

The motor housing 10, the right cover member 20, and the left cover member 30 constitute one case A. Since the right cover member 20 is located on the right side of the case A and this right cover member 20 constitutes the right part of the case A, the right cover member 20 may also be referred to as a "right constituent member." Similarly, since the left cover member 30 is located on the left side of the case A and this left cover member 30 constitutes the left part of the case A, the left cover member 30 may also be referred to as a "left constituent member." Since the motor housing 10 is located between the right cover member 20 and the left cover member 30, and this motor housing 10 constitutes an intermediate part of the case A in the left-and-right-direction, the motor housing 10 may also be referred to as an "intermediate part constituent member." The motor housing 10 is sandwiched between the right cover member 20 and the left cover member 30 in the left-and-right direction. The structure of the case A may further be provided with another member, without being limited to the structure described above.

As illustrated by the outline structure in Fig. 3, a first coupling mechanism 2a coupled to the crankshaft of the engine E is fixed to a right end part of the shaft 2. The first coupling mechanism 2a is changeable between a connected state in which the crankshaft of the engine E is connected to the shaft 2 and a non-connected state in which the crankshaft of the engine E is not connected to the shaft 2, and the change operation is controlled by the control unit 90.

A second coupling mechanism 2b is fixed to the shaft 2, on the left side of the first coupling mechanism 2a. The second coupling mechanism 2b is changeable between a connected state in which the motor 3 is connected to the shaft 2 and a non-connected state in which the motor 3 is not connected to the shaft 2, and the change operation is controlled by the control unit 90. By changing the second coupling mechanism 2b into the connected state, the power of the motor 3 is transmitted to the shaft 2. By the control unit 90 controlling the first coupling mechanism 2a and the second coupling mechanism 2b, only the power of the engine E can be outputted, only the power of the motor 3 can be outputted, or the synthesized power of the engine E and the motor 3 can be outputted. For this control technique, conventional well-known techniques can be used. Further, a transmission 2c is provided to the shaft 2, on the left side surface of the second coupling mechanism 2b. The power of the engine E and/or the power of the motor 3 are inputted into the transmission 2c.

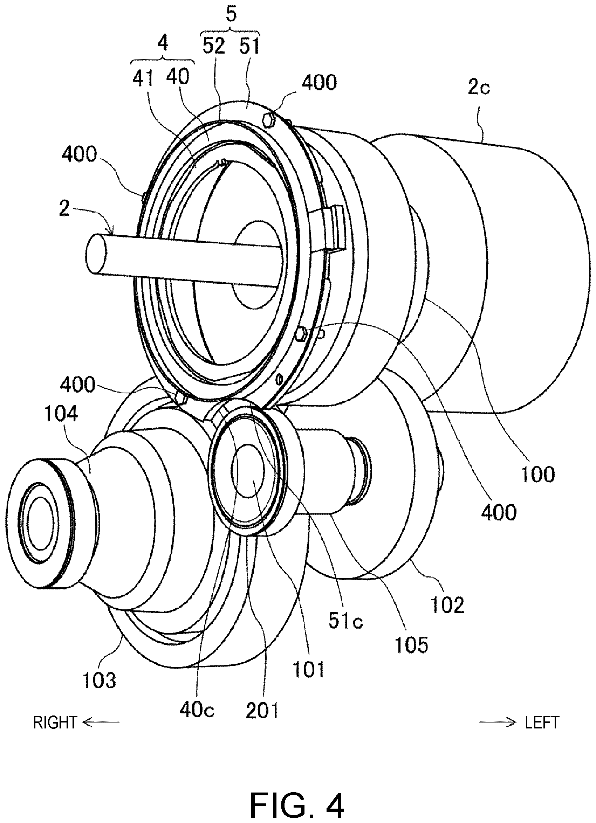

Fig. 4 is a view schematically illustrating an inner structure of the vehicle drive system 1, where the first coupling mechanism 2a and the second coupling mechanism 2b are omitted. A first gear 100 is provided to an intermediate part of the shaft 2. The output of the transmission 2c is transmitted to the first gear 100. A lower shaft 101 is provided below the shaft 2, and this lower shaft 101 is also disposed inside the case A. The lower shaft 101 and the shaft 2 are parallel to each other. Both end parts of the lower shaft 101 are rotatably supported inside the case A. A second gear 102 which meshes with the first gear 100 is provided to an intermediate part of the lower shaft 101.

A final gear 103 is provided below the shaft 2. The final gear 103 is fixed to a gear carrier 104, and this gear carrier 104 is rotatably supported inside the case A. The axial center of the gear carrier 104 is parallel to the axial center of the lower shaft 101. A third gear 105 which meshes with the final gear 103 is provided to the intermediate part of the lower shaft 101.

Therefore, when the power of the engine E and/or the power of the motor 3 is outputted from the transmission 2c, it is then transmitted to the second gear 102 via the first gear 100. Since the second gear 102 and the third gear 105 are fixed to the lower shaft 101, the rotational force transmitted to the second gear 102 is transmitted from the third gear 105 to the final gear 103 to rotate the gear carrier 104. Since left and right drive shafts (not illustrated) are coupled to the gear carrier 104 via a differential mechanism (not illustrated), the power of the engine E and/or the power of the motor 3 are transmitted from the drive shafts to the driving wheels (not illustrated).

As partially illustrated in Fig. 3, a right end part (axial one end part) of the lower shaft 101 is rotatably supported by a bearing part 200. Although not illustrated, a left end part (axial other end part) of the lower shaft 101 is rotatably supported by another bearing. The bearing part 200 has a bearing 201 and a bearing fixing part 202 for fixing the bearing 201 to a given position. The bearing fixing part 202 may be formed, for example, integrally with the case A, or it may be formed by a different member from the case A and may be assembled to the case A. The bearing fixing part 202 of this embodiment has a concaved shape which opens leftwardly, and the bearing 201 is inserted into this open part and is assemble to the bearing fixing part 202.

The right side of the bearing fixing part 202 is formed so that it axially approaches to the motor 3. In detail, in order to form the concaved shape into which the bearing 201 is insertable, the bearing fixing part 202 has a bulged surface 202a having a shape bulged on the right side. The bulged surface 202a and the side surface of the motor 3 have a spatial relationship in which they oppose to each other.

The fundamental structure of the motor 3 may be common structures which have been conventionally well-known. That is, the motor 3 has a stator coil 3a and a rotor 3b. The stator coil 3a is structured so that a plurality of coils are disposed annually, and is fixed to an inner surface of the case A. On the other hand, the rotor 3b includes a plurality of magnets, and is fixed to an outer circumferential surface of the second coupling mechanism 2b in a state where it is disposed radially inward of the stator coil 3a.

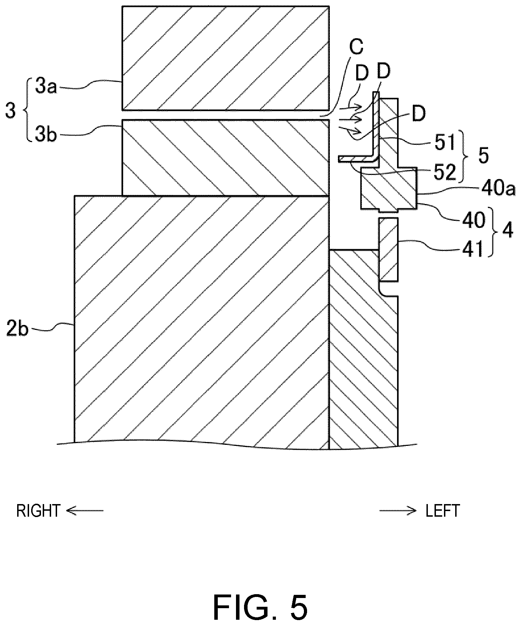

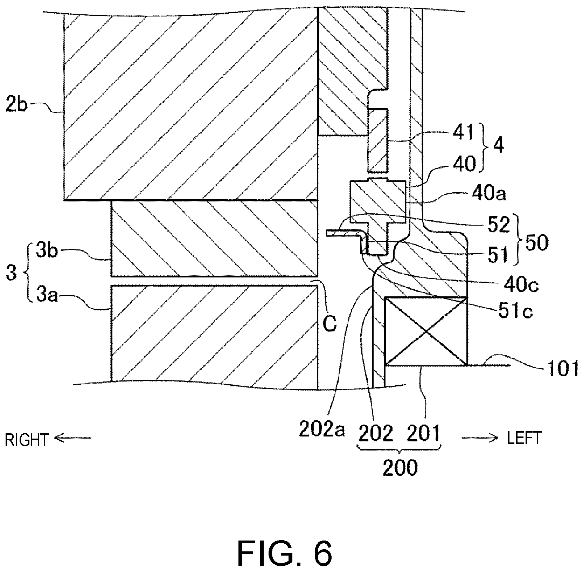

Fig. 5 illustrates an enlarged view of the vicinity of an upper part of the stator coil 3a and the rotor 3b, and Fig. 6 illustrates an enlarged view of the vicinity of a lower part of the stator coil 3a and the rotor 3b. As illustrated in Figs. 5 and 6, since an outer circumferential surface of the stator coil 3a is separated from an inner circumference surface of the rotor 3b in a radial direction, a given gap C is formed therebetween. As illustrated in Fig. 6, the bulged surface 202a of the bearing part 200 is located so that it opposes to the left surface of the stator coil 3a and the left surface of the rotor 3b, and it also opposes to the gap C formed between the stator coil 3a and the rotor 3b. Further, in order to shorten the dimension of the case A in the left-and-right direction as much as possible, the interval of the bearing part 200, and the stator coil 3a and the rotor 3b is set narrowly.

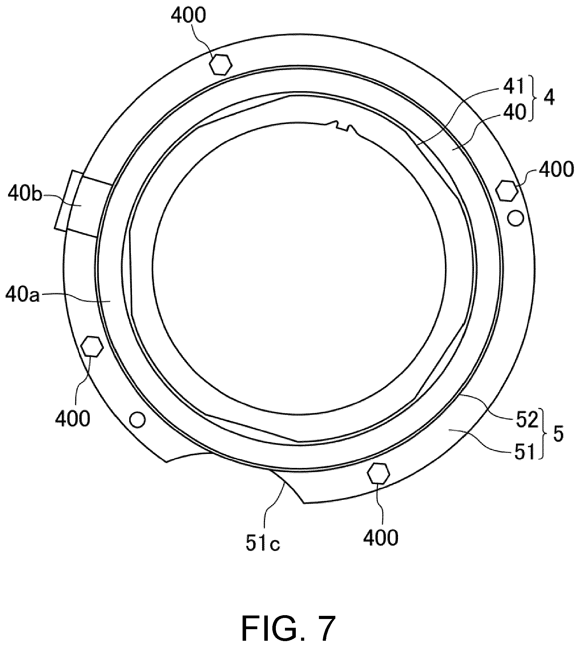

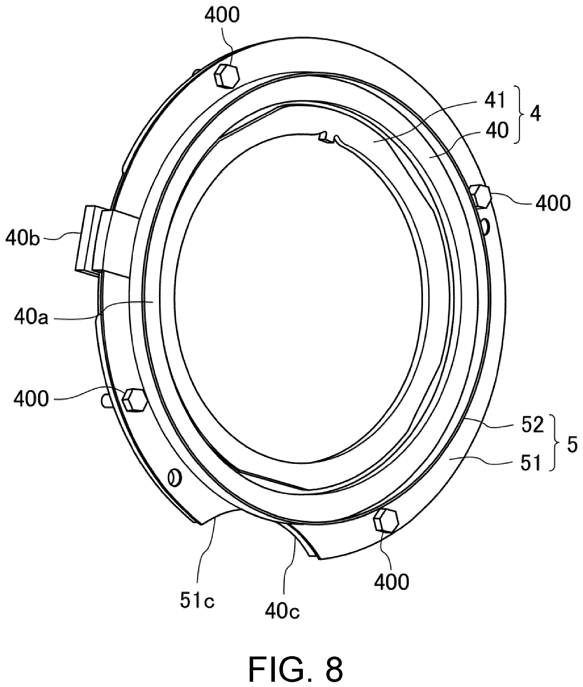

The resolver 4 has a resolver stator 40 and a resolver rotor 41. As illustrated in Figs. 7 and 8, the resolver stator 40 has a body part 40a comprised of an annular plate member, and a sensor part 40b fixed to the body part 40a. As illustrated in Figs. 5 and 6, the body part 40a is fixed to the case A and extends in the radial direction of the shaft 2. The radially outward part of the body part 40a extends to a vicinity of (near) the gap C formed between the stator coil 3a and the rotor 3b of the motor 3.

The resolver rotor 41 is comprised of an annular plate member disposed radially inward of the resolver stator 40. The radially inward part of the resolver rotor 41 is fixed to the left side surface of the second coupling mechanism 2b. Therefore, the resolver rotor 41 is integrally formed with the rotor 3b of the motor 3 via the second coupling mechanism 2b, and rotates with the rotor 3b.

A concavo-convex shape is formed continuously in the circumferential direction in the radially outward part of the resolver rotor 41. When the resolver rotor 41 excited by alternating current is rotated with the rotor 3b of the motor 3, the sensor part 40b of the resolver stator 40 detects a change in the electromotive force. Based on the concavo-convex shape of the resolver rotor 41 and a relative rotating angle change of the sensor part 40b, the rotation position of the rotor 3b of the motor 3 can be detected. This detection technique of the resolver 4 may be a conventionally well-known technique.

During rotation of the motor 3, the leakage magnetic fluxes (illustrated by arrows D in Fig. 5) are discharged from the gap C formed between the stator coil 3a and the rotor 3b. In this embodiment, since the dimension of the case A in the left-and-right direction is desirable to be shortened as much as possible, the distance between the resolver 4, and the stator coil 3a and the rotor 3b is set short. Further, the dimension of the case A in the left-and-right direction is also shortened by disposing the second coupling mechanism 2b radially inward of the resolver 4. Thus, the premise structure of this embodiment is a structure where the gap C formed between the stator coil 3a and the rotor 3b opposes to the resolver 4 with an approached distance therebetween, and therefore, the leakage magnetic flux discharged from the gap C tends to give an adverse effect on the resolver 4. The leakage magnetic flux may be overlapped with the detection signal as noise, when the sensor part 40b of the resolver stator 40 detects the change in the electromotive force.

Regarding this, in this embodiment, the shielding member 5 is provided so that the leakage magnetic flux discharged from the gap C formed between the stator coil 3a and the rotor 3b does not to give the adverse effect on the resolver 4. The shielding member 5 is made of nonmagnetic material, and it is constructed to cover the resolver 4. Although the nonmagnetic material which constitutes the shielding member 5 is not limited in particular, it may be aluminum alloy, for example.

The shielding member 5 has a first shielding plate 51 which is disposed so that it extends in the radial direction of the shaft 2 in a space between the gap C formed between the rotor 3b the stator coil 3a, and the resolver rotor 41, and a second shielding plate 52 which extends in a direction approaching the rotor 3b of the motor 3 from the first shielding plate 51. The first shielding plate 51 has an annular shape. The right side surface of the first shielding plate 51 is disposed so that it opposes to the gap C formed between the stator coil 3a and the rotor 3b. The radially outer edge part of the first shielding plate 51 reaches radially outward of the gap C, and the radially inner edge part of the first shielding plate 51 reaches radially inward of the gap C. Therefore, when seen from the left side, it has the spatial relationship in which the gap C is located at an intermediate part of the first shielding plate 51 in the radial direction. The thickness of the first shielding plate 51 is set thinner than the thickness of the body part 40a of the resolver stator 40.

The second shielding plate 52 extends in a direction approaching the rotor 3b of the motor 3 from the radially inner edge part (with respect to the shaft 2) of the first shielding plate 51, and forms an annular shape which continues in the circumferential direction of the rotor 3b of the motor 3. An angle formed between the first shielding plate 51 and the second shielding plate 52 is set as about 90°. Note that the angle formed between the first shielding plate 51 and the second shielding plate 52 is not limited to 90°, and it may be set within a range of 80° or more and 120° or less.

The second shielding plate 52 is disposed radially inward of the gap C formed between the stator coil 3a and the rotor 3b. Therefore, the second shielding plate 52 can suppress leakage magnetic flux from being discharged from the gap C toward the body part 40a of the resolver stator 40 reaches the body part 40a.

The first shielding plate 51 and the second shielding plate 52 are formed integrally. Although the method of integrally forming the shielding member 5 is not limited in particular, the shielding member 5 having the first shielding plate 51 and the second shielding plate 52 can be obtained, for example, by press-molding a sheet of metal plate with a metallic mold (not illustrated). Note that the first shielding plate 51 and the second shielding plate 52 may be constituted from different members. In this case, after forming the first shielding plate 51 and the second shielding plate 52 from the different members, the members may be integrally coupled to each other.

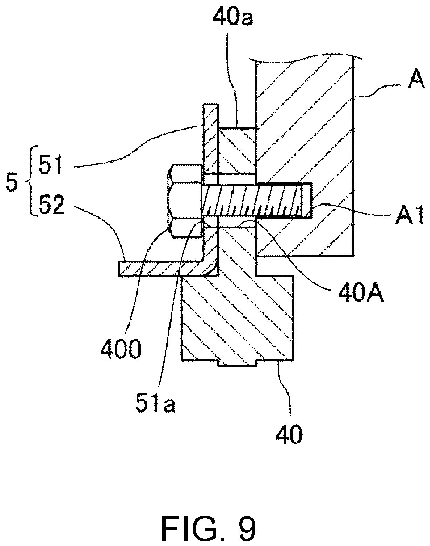

As illustrated in Fig. 9, the first shielding plate 51 of the shielding member 5 is fastened to the case A by fastening members 400 common to the resolver stator 40. That is, a first insertion hole 51a into which the shank of a bolt or a screw as the fastening member 400 is inserted is formed in the first shielding plate 51 so that it penetrates in the thickness direction. Further, a second insertion hole 40A is formed in the body part 40a of the resolver stator 40 so that it penetrates in the thickness direction and is in agreement with the first insertion hole 51a. A threaded hole A1 corresponding to the first insertion hole 51a and the second insertion hole 40A is formed in the case A. After inserting the shank of the fastening member 400 into the first shielding plate 51, the first insertion hole 51a, and the second insertion hole 40A of the resolver stator 40 in this order, the shank is threadedly engaged with the threaded hole A1 of the case A to fasten the first shielding plate 51 and the resolver stator 40 to the case A together. Although in this embodiment the number of fastening members 400 are four, and the first shielding plate 51 is fastened by the four fastening members 400 to the case A at a plurality of locations which are away in the circumferential direction of the shaft 2 as illustrated in Figs. 7 and 8, the number of fastening members 400 is not limited to four, and it may be an arbitrary number, such as three or less or five or more. The same numbers of first insertion holes 51a, second insertion holes 40A, and threaded holes A1 as the number of fastening members 400 may be formed. Note that the first shielding plate 51 and the resolver stator 40 may be fastened to the case A by different fastening members (not illustrated), without being fastened together.

As described above, since in this embodiment the interval between the bearing part 200, and the stator coil 3a and the rotor 3b is narrow, it is difficult to dispose the first shielding plate 51 of the shielding member 5 between the bearing part 200, and the stator coil 3a and the rotor 3b. A notch 51c for avoiding interference with the bearing part 200 is formed radially outward of the first shielding plate 51 of the shielding member 5. Since the bearing part 200 is provided below the shaft 2 and the bearing fixing part 202 is close to the stator coil 3a and the rotor 3b, the notch 51c is formed only in a lower part of the first shielding plate 51 to avoid interference with the bearing fixing part 202.

Thus, the notch 51c is formed only in the first shielding plate 51, and is not formed in the second shielding plate 52. That is, since the notch 51c is formed in a part of the shielding member 5 other than the second shielding plate 52, the second shielding plate 52 can form the annular shape which continues in the circumferential direction. Therefore, the second shielding plate 52 can improve the shielding effects on the leakage magnetic flux. Although the shape of the notch 51c may be set arbitrarily, it is the annular shape in this embodiment.

Further, the notch 51c is formed in the part separated from the parts for the fastening by the fastening members 400 in the circumferential direction of the shaft 2. In other words, the notch 51c is formed between the fastening parts by the fastening members 400. Since the notch 51c is the part for avoiding interference with the bearing part 200, it is preferred to be a notch within the minimum area which can avoid the interference with the bearing part 200, but it may be formed in a sufficiently larger area than the bearing part 200, without being limited to the configuration described above.

Although it is not illustrated, a gear may be provided at a part in the case A where it interferes with the shielding member 5. In this case, a notch may be formed for avoiding interference with the gear in the shielding member 5. Alternatively, both the notch 51c for avoiding interference with the bearing part 200 and the notch for avoiding interference with the gear may be formed in the shielding member 5.

As illustrated in Figs. 6 and 8, a notch 40c is also formed in the body part 40a of the resolver stator 40 to correspond to the notch 51c of the shielding member 5. Note that the notch 40c of the resolver stator 40 is not essential, but it may be provided as needed.

### (Operation and Effects of Embodiment)

As described above, according to this embodiment, the shielding member 5 is provided inside the case A, the first shielding plate 51 is disposed in the space between the gap C formed between the stator coil 3a and the rotor 3b of the motor 3, and the resolver rotor 41, and the second shielding plate 52 extending in the direction approaching the side surface of the rotor 3b of the motor 3 from the first shielding plate 51 is formed. Therefore, the first shielding plate 51 can suppress that the leakage magnetic flux discharged from the gap C formed between the stator coil 3a and the rotor 3b of the motor 3 reaches the resolver 4, and the second shielding plate 52 can also suppress the same. Further, since the first shielding plate 51 extends in the radial direction and the second shielding plate 52 extends in the direction approaching the rotor 3b of the motor 3, and the shielding plates 51 and 52 extend in different directions, the shielding effects on the leakage magnetic flux discharged from the gap C increase.

Further, since the notch 51c is formed in the shielding member 5, interference between the shielding member 5 and the bearing part 200 can be avoided. Thus, when narrowing the interval between the bearing part 200 and the shielding member 5 which are disposed inside the case A in order to shorten the size of the case A in the left-and-right direction, the shielding member 5 can be disposed while avoiding the interference with the bearing part 200. Further, since the notch 51c is formed partially in the shielding member 5, the shielding effects on the leakage magnetic flux by the shielding member 5 hardly fall, even if the notch 51c is provided.

The above embodiment is merely illustration, and it must not be interpreted restrictively in any aspects. Further, any modifications and changes belonging to the equivalent range of the appended claims fall within the scope of the present disclosure.

### Industrial Applicability

As described above, the vehicle drive system according to the present disclosure can be utilized, for example, for hybrid vehicles or electric vehicles.

### DESCRIPTION OF REFERENCE CHARACTERS

- 1: Vehicle Drive System
- 2: Shaft
- 3: Motor
- 4: Resolver
- 40: Resolver Stator
- 41: Resolver Rotor
- 5: Shielding Member
- 51: First Shielding Plate
- 51c: Notch
- 52: Second Shielding Plate
- 100: First Gear
- 101: Lower Shaft
- 102: Second Gear
- 200: Bearing Part
- 201: Bearing
- 202: Bearing Fixing Part
- 400: Fastening Member
- A: Case
- C: Gap

## Claims

1. A vehicle drive system, comprising:
a shaft (2);
a motor (3) configured to rotate the shaft (2);
a resolver (4) configured to detect a rotation state of the motor (3);
a shielding member (5) configured to suppress leakage magnetic flux discharging from the motor (3) to the resolver (4); and
a case (A) configured to accommodate the shaft (2), the motor (3), and the resolver (4),
wherein the shielding member (5) is disposed so that the shielding member (5) extends in a radial direction of the shaft (2) in a space between a gap (C) that is formed between a stator coil (3a) and a rotor (3b) of the motor (3), and the resolver (4), and
wherein a notch (51c) is formed radially outward of the shielding member (5) to avoid interference with one of a bearing part (200) and a gear (102) provided inside the case (A).

2. The vehicle drive system of claim 1,
wherein the bearing part (200) includes a bearing (201) and a bearing fixing part (202) configured to fix the bearing (201) to a given position,
wherein the bearing fixing part (202) is formed so that the bearing fixing part (202) approaches the motor (3) in an axial direction, and
wherein the notch (51c) is formed to avoid interference with the bearing fixing part (202).

3. The vehicle drive system of claim 2,
wherein a first gear (100) is provided to the shaft (2),
wherein a lower shaft (101) having a second gear (102) configured to mesh with the first gear (100) is provided below the shaft (2),
wherein the bearing part (200) supports one end part of the lower shaft (101) in the axial direction, and
wherein the notch (51c) is formed only in a lower part of the shielding member (5).

4. The vehicle drive system of claim 1,
wherein the shielding member (5) includes a first shielding plate (51) disposed so that the first shielding plate (51) extends in the radial direction of the shaft (2) in the space, and a second shielding plate (52) extending in a direction approaching the rotor (3b) from a radially inner edge part of the first shielding plate (51) with respect to the shaft (2), and
wherein the notch (51c) is formed in the first shielding plate (51).

5. The vehicle drive system of claim 4,
wherein the second shielding plate (52) has an annular shape continuous in a circumferential direction of the rotor (3b), and
wherein the notch (51c) is formed in a part of the shielding member (5) other than the second shielding plate (52).

6. The vehicle drive system of claim 4,
wherein the first shielding plate (51) is fastened by a plurality of fastening members (400) to the case (A) at a plurality of fastening parts separated in a circumferential direction of the shaft (2), and
wherein the notch (51c) is formed in a part separated from the fastening parts in the circumferential direction of the shaft (2).

7. The vehicle drive system of claim 2,
wherein the shielding member (5) includes a first shielding plate (51) disposed so that the first shielding plate (51) extends in the radial direction of the shaft (2) in the space, and a second shielding plate (52) extending in a direction approaching the rotor (3b) from a radially inner edge part of the first shielding plate (51) with respect to the shaft (2), and
wherein the notch (51c) is formed in the first shielding plate (51).

8. The vehicle drive system of claim 7,
wherein the second shielding plate (52) has an annular shape continuous in a circumferential direction of the rotor (3b), and
wherein the notch (51c) is formed in a part of the shielding member (5) other than the second shielding plate (52).

9. The vehicle drive system of claim 7,
wherein the first shielding plate (51) is fastened by a plurality of fastening members (400) to the case (A) at a plurality of fastening parts separated in a circumferential direction of the shaft (2), and
wherein the notch (51c) is formed in a part separated from the fastening parts in the circumferential direction of the shaft (2).

10. The vehicle drive system of claim 3,
wherein the shielding member (5) includes a first shielding plate (51) disposed so that the first shielding plate (51) extends in the radial direction of the shaft (2) in the space, and a second shielding plate (52) extending in a direction approaching the rotor (3b) from a radially inner edge part of the first shielding plate (51) with respect to the shaft (2), and
wherein the notch (51c) is formed in the first shielding plate (51).

11. The vehicle drive system of claim 10,
wherein the second shielding plate (52) has an annular shape continuous in a circumferential direction of the rotor (3b), and
wherein the notch (51c) is formed in a part of the shielding member (5) other than the second shielding plate (52).

12. The vehicle drive system of claim 10,
wherein the first shielding plate (51) is fastened by a plurality of fastening members (400) to the case (A) at a plurality of fastening parts separated in a circumferential direction of the shaft (2), and
wherein the notch (51c) is formed in a part separated from the fastening parts in the circumferential direction of the shaft (2).
